Europäisches Patentamt

European Patent Office

Office européen des brevets

(19)

(11) **EP 0 647 474 B1**

(12) **FASCICULE DE BREVET EUROPEEN**

(45) Date de publication et mention
de la délivrance du brevet:
**06.05.1998 Bulletin 1998/19**

(51) Int. Cl.$^6$: **B01J 41/02**

(21) Numéro de dépôt: **94402146.8**

(22) Date de dépôt: **27.09.1994**

(54) **Produit et procédé d'élimination d'ions sulfates contenus dans les solutions salines**

Produkt und Verfahren zum Entfernen Sulfationen aus Salzlösungen

Product and method for removing sulfate ions from saline solutions

(84) Etats contractants désignés:
**BE DE FR GB IT NL**

(30) Priorité: **06.10.1993 FR 9311927**

(43) Date de publication de la demande:
**12.04.1995 Bulletin 1995/15**

(73) Titulaire: **ELF ATOCHEM S.A.**
**92800 Puteaux, Hauts-de-Seine (FR)**

(72) Inventeur: **Joubert, Philippe**
**F-69005 Lyon (FR)**

(56) Documents cités:
**EP-A- 0 134 314          US-A- 3 718 559**
**US-A- 4 415 678**

- **DATABASE WPI Section Ch, Week 8743, Derwent Publications Ltd., London, GB; Class E32, AN 87-305989 & SU-A-1 301 482 (SIBE METAL) 7 Avril 1987**
- **PATENT ABSTRACTS OF JAPAN vol. 15, no. 377 (C-870) 24 Septembre 1991 & JP-A-03 153 522 (KANEGAFUCHI CHEM. IND.) 01 Juillet 1991 & EP-A-0 427 256 (KANEGAFUCHI)**

Printed by Xerox (UK) Business Services
2.16.3/3.4

**Description**

La présente invention a pour objet un procédé d'élimination d'ions sulfates contenus dans des solutions salines, en particulier les ions sulfates contenus dans des saumures.

On cherche depuis plusieurs années des procédés permettant d'abaisser la teneur en ions sulfates dans les saumures d'électrolyse, tout en n'engendrant pas de rejet d'éléments toxiques.

On cherche pour l'avenir des traitements générant moins d'effluents ou du moins rejetant moins d'éléments toxiques tels que le mercure ou le baryum. Ainsi, la désulfatation des saumures par la précipitation du sulfate de baryum présente plusieurs inconvénients:

- nécessité de se conformer aux réglementations en vigueur relative aux teneurs en Ba "libre" admissible dans les boues d'épuration;
- dans les "boucles mercure", la mise en décharge de ces boues contaminées dépend de leur teneur en Hg;
- dans les boucles saumures des procédés chlorate, les rejets de chrome sous forme $BaCrO_4$ sont aussi réglementés.

Les procédés chimiques reposant sur la précipitation des ions sulfates ne permettent pas d'éviter le rejet d'autres éléments toxiques contenus dans la saumure, notamment le mercure, à moins d'effectuer un lavage ultérieur des boues.

Le procédé sur résine anionique, pour des saumures faiblement concentrées (100 g/l NaCl), a une capacité de désulfatation très limitée par le bilan eau. Il n'apparaît donc pas comme très intéressant, bien qu'il permette peut-être d'éviter le rejet de Hg par un rinçage de la résine avant l'élution.

L'absorption sur une substance inorganique semble la voie la plus prometteuse. Ainsi, des substances telles que l'hydroxyde de zirconium possèdent une bonne affinité vis-à-vis des ions sulfates.

Le procédé décrit dans le brevet US 3-378336 consiste à purifier une saumure sur une résine cationique préalablement mise sous forme baryum.

Les alcalino-terreux tels que le magnésium et le calcium déplacent le baryum qui, ainsi libéré, précipite sous forme de sulfate de baryum.

Ce procédé présente beaucoup d'inconvénients:

- risque de colmatage de la résine par la formation des précipités,
- la libération du Ba n'est fonction que de la teneur en Ca et en Mg et non de celle en ions sulfates. Les problèmes liés au baryum subsistent.

BAYER (US 4-556463) décrit un schéma de procédé permettant la désulfatation des saumures par deux moyens conjugués:

- passage sur résine anionique faiblement basique et cristallisation du sulfate,
- les apports en eau dans la boucle anionique sont utilisés pour diluer la saumure appauvrie jusqu'à 100 g/l en NaCl.

Ce procédé a une capacité de désulfatation limitée. En effet, la désulfatation est directement liée à la quantité d'eau maximale qui peut être introduite dans la boucle saumure.

Le brevet US 4 415 677 décrit un procédé selon lequel une résine cationique est imprégnée par un sel de zirconium. L'oxychlorure de zirconium est ensuite mis sous forme d'hydroxyde par l'ammoniaque:

$$ZrOCl_2 + 2NH_4OH \rightarrow ZrO(OH)_2 + 2NH_4Cl$$

L'excès d'ammoniaque est lavé par la saumure. La solution de NaCl à 26% est acidifiée à pH = 1 à 3 avant de traverser la colonne. A T = 50°C, pH = 1 et 10 BV/h (BV: volume du lit), la teneur en ions sulfates peut être abaissée de 970 à 110 ppm.

Dans le brevet US 4 405 576, l'adjonction d'un monomère d'acide acrylique qui est polymérisé in situ améliore la fixation du composé de zirconium. D'après l'exemple, le taux de chargement est d'environ 5 g de $SO_4^{--}$ par litre de résine à pH = 2,4, T = 72°C et à une concentration en ions sulfates de 1,2 g/l.

Dans le brevet US 4 415 678 du même inventeur, le taux de chargement atteint 14 g d'ions sulfates par litre de résine à pH = 1,5 et T = 65°C. L'élution a été effectuée dans tous les cas par de l'eau. Les volumes des solutions traitées dans les différents exemples ne dépassent pas 10 BV et aucune indication n'est donnée sur l'évolution de la capacité après régénération.

Kanegafuchi revendique dans le brevet EP 427 256 un procédé d'extraction des ions sulfates, contenus dans les saumures, par un adsorbant à base d'hydroxyde-oxyde de zirconium. Les mécanismes d'échangeur d'ions du catalyseur sont:

. l'absorption en milieu acide

$$2ZrO(OH)_2 + Na_2SO_4 + 2HCl \rightarrow (ZrOOH)_2SO_4 + 2H_2O + 2NaCl$$

. la désorption en milieu basique

$$(ZrOOH)_2SO_4 + 2NaOH \rightarrow 2ZrO(OH)_2 + Na_2SO_4$$

Le produit se présente sous forme de particules de 1 à 20 µm dont l'efficacité est proportionnelle au nombre de groupes OH⁻ en surface. La teneur en ions sulfates d'une saumure à 200 g/l en NaCl peut être abaissée de 6,2 g/l à moins de 0,5 g/l par cet adsorbant. Cependant, dans le cadre de la désulfatation des saumures des électrolyses chlorate, il est à craindre que le chrome soit fixé par l'adsorbant et ensuite rejeté, le chromate étant adsorbé par l'adsorbant.

Strelko et al. ["The selectivity of the sorption of sulphate ions by hydrated zirconium dioxide", Zhurnal Fizicheskoi Khimii 64, 408-412 (1990)] décrivent la sélectivité de l'oxyde de zirconium hydraté vis-à-vis de l'adsorption de sulfate. Le composé de zirconium utilisé présente une teneur en produit sec de 70%, c'est-à-dire consiste en un composé présentant une perte au feu identique à celle du composé utilisé dans le brevet EP 427 256.

L'abrégé des brevets japonais CA-118127578, relatif à un brevet au nom de Kanegafuchi JP-A-300652/92 décrit un procédé d'élimination d'ions sulfates de saumures, préalablement déchlorées, à l'aide de particule de $Zr(OH)_4$ (d'une dimension de 7-8 µm) en tant qu'échangeur d'ion et de NaOH en tant que composé de désorption.

En fait, il est souhaitable d'éliminer totalement les ions $SO_4^{--}$ contenus dans des saumures destinées à la fabrication du chlore et de la soude d'une part et du chlorate de sodium d'autre part, tout en évitant le rejet de substances toxiques. Aucun des brevets cités ci-dessus ne résout ce problème complètement.

Ainsi, la présente invention fournit un procédé amélioré de séparation d'ions sulfates de solutions de saumures, comprenant les étapes de:

(i) mise en contact de la solution de saumure avec un composé zirconifère, à un pH acide;

(ii) séparation en une solution de saumure appauvrie en ions sulfates et en le composé zirconifère sur lequel sont adsorbés les ions sulfates;

(iii) désorption des ions sulfates par traitement du composé zirconifère obtenu à l'étape (ii) à un pH basique;

(iv) séparation en une solution aqueuse basique enrichie en ions sulfates et en un composé zirconifère sensiblement exempt d'ions sulfates;

caractérisé en ce que le composé zirconifère est de l'hydroxyde de zirconium hydraté, de formule $Zr(OH)_4.xH_2O$, avec x compris entre 4 et 200, et se trouvant sous forme d'un précipité gélatineux non-séché.

Le terme "précipité gélatineux non-séché", tel qu'utilisé dans la présente invention, correspond à la formation d'agglomérats intermédiaires entre le gel et les précipités massifs, tel que définie par A. Pierre dans "Introduction aux procédés sol-gel", Edition Septima, Paris 1992, page 7. Dans la suite, on se référera au terme précipité gélatineux zirconifère ou simplement au terme précipité gélatineux.

Selon un mode de réalisation, le précipité gélatineux zirconifère présente la formule $Zr(OH)_4.xH_2O$, avec x compris entre 12 et 100, de préférence entre 12 et 25.

Selon un mode de mise en oeuvre du procédé, la teneur en zirconium du précipité gélatineux est comprise entre 5 et 60% en poids, exprimée en % massique de $ZrO_2$.

Les saumures contenant des ions sulfates auxquelles s'applique la présente invention sont, par exemple, des solutions aqueuses de chlorure de sodium, de chlorure de potassium, de chlorure de lithium, et autre. Il n'y a aucune contrainte de concentration en chlorure de la saumure contenant les ions sulfates, ce procédé selon la présente invention s'appliquant indifféremment que la concentration en ions chlorures soit élevée ou non.

Le précipité gélatineux zirconifère non-séché est une des caractéristiques importantes du procédé selon la présente invention. En effet, l'utilisation de ce précipité gélatineux non-séché, composé d'hydroxyde de zirconium hydraté, permet d'obtenir des rendements d'élimination d'ions sulfates nettement supérieurs à ceux de l'art antérieur, en particulier selon le brevet EP 0 427256.

Ce précipité gélatineux zirconifère peut être préparé par tout moyen approprié, connu dans l'état de la technique des précipités gélatineux. Le précipité gélatineux est, de façon générale, obtenu par précipitation d'une suspension zirconifère. Celle-ci peut être au départ neutre ou acide par exemple si elle est préparée à partir de dissolution de $ZrOCl_2.8H_2O$, ou de sulfate basique de zirconium, de nitrate de zirconium, ou du composé issu de l'hydrolyse de $ZrCl_4$. La précipitation s'effectue par augmentation du pH par un agent alcalin, en particulier par $NH_4OH$ (pH>2 au moins). La solution de départ peut aussi être basique si elle résulte de la dissolution du carbonate de zirconyle. La précipitation peut soit s'effectuer par basification du milieu (pH>10) au moyen d'un agent alcalin approprié, tel que $NH_4OH$ ou NaOH, soit par acidification pour décarbonater la solution au moyen de tout agent acide, en particulier un acide minéral. La concentration en Zr de la solution de départ est choisie en fonction des autres conditions opératoires, et est par exemple de 0,2 M/l. La solution de départ est une solution aqueuse. La précipitation est mise en oeuvre à température ambiante ou à température élevée, jusqu'à la valeur du point d'ébullition. Avantageusement, la précipitation est mise en oeuvre à une température d'environ 80 à environ 85°C. Il est également avantageux d'opérer à partir d'une solution zirconifère acide et de régler le pH de précipitation à une valeur comprise entre 2 et 4. La dimension particulière de l'oxyde de Zr formant le précipité gélatineux est comprise entre 1 et 20 µm, de préférence 2 à 10 µm. Le procédé de précipitation peut comprendre des étapes statiques pendant lesquelles on laisse reposer la solution. Il est possible de décanter après une première précipitation, soutirer le liquide surnageant, et réalimenter avec une solution de départ neuve. Ceci a pour effet une croissance de la dimension particulière des grains, et permet de réguler la distribution de la granulométrie. Par ailleurs, il est possible d'opérer en batch, en semi-continu ou en continu. En aucun cas le précipité gélatineux zirconifère ne doit subir de traitement de séchage, il doit être uniquement égoutté, essoré, c'est-à-dire que seule l'eau en excès doit être éliminée.

Ce précipité gélatineux zirconifère est aussi un des objets de la présente invention, ainsi que son procédé de préparation. Ainsi, l'invention a aussi pour objet le précipité gélatineux de zirconium de formule $Zr(OH)_4.xH_2O$, avec x compris entre 4 et 200.

Dans le précipité gélatineux, le zirconium est présent sous forme d'hydroxyde hydraté de formule $Zr(OH)_4.xH_2O$. Toutefois, tous les pourcentages pondéraux de Zr seront exprimés sur la base du dioxyde, i.e. $ZrO_2$.

La première étape du procédé selon la présente invention comprend la mise en contact à un pH acide de la saumure avec le précipité gélatineux zirconifère afin de favoriser l'adsorption des ions sulfates. Le pH acide est réglé par addition d'un acide. Tout acide non sulfatant est approprié, tel qu'acide nitrique, chlorhydrique, et autre. L'acide sulfurique sera à éviter, car les anions de cet acide sont $SO_4^{--}$, tandis que l'acide chlorhydrique sera préféré, l'anion étant $Cl^-$, celui de la saumure.

Selon un mode de réalisation, le pH de l'étape acide, i.e. de l'étape (i) est compris entre 1 et 5, de préférence 2 à 4.

Cette première étape de mise en contact pour opérer l'adsorption des ions $SO_4^{--}$ sur le précipité gélatineux d'hydroxyde de zirconium peut être mise en oeuvre sous agitation ou non, pendant une durée comprise entre 5 mn et 3 heures. La température est comprise entre la température ambiante et le point d'ébullition, de préférence comprise entre 20 et 90°C, par exemple de l'ordre d'environ 50-80°C.

Au cours de cette première étape, le précipité gélatineux de zirconium et les ions sulfates sont présents en un ratio molaire $Zr/SO_4$ compris entre 2 et 20, de préférence entre 5 et 15. L'efficacité du présent procédé permet de diminuer ce ratio par rapport à l'art antérieur, et donc de réaliser des gains en zirconium qui est une matière première d'un coût élevé.

Ainsi, selon un mode de réalisation, le rapport molaire $Zr/SO_4$ au cours de l'étape (i) est compris entre 2 et 20.

La seconde étape du procédé est la séparation d'un côté en une solution appauvrie en ions sulfates, d'un autre côté en un précipité gélatineux zirconifère, ou gâteau, sur lequel se sont adsorbés les ions $SO_4^{--}$. Cette séparation est mise en oeuvre par tout moyen approprié, tel que centrifugation, filtration par succion, filtration-lavage, et autres. La filtration-lavage consiste en une filtration suivie d'un lavage à l'eau. La température de mise en oeuvre est comprise entre la température ambiante et le point d'ébullition, de préférence entre 20 et 90°C, par exemple environ 50-80°C.

La troisième étape du procédé consiste en une désorption des ions sulfates par traitement du précipité gélatineux (ou gâteau) avec une solution alcaline pour provoquer la désorption des ions sulfates. Tout agent alcalin est approprié, tel que bicarbonate ou carbonate de métaux alcalins, hydroxyde de métaux alcalins et autres. Un agent préféré est l'hydroxyde de soude.

Selon un mode de réalisation, le pH de la troisième étape est compris entre 7 et 13, de préférence 8 à 11.

Cette étape peut être mise en oeuvre sous agitation, pendant une durée de 5 mn à 3 heures. La température de mise en oeuvre est comprise entre la température ambiante et le point d'ébullition, de préférence entre 20 et 90°C, par exemple environ 50-80°C, avantageusement 50-60°C.

La solution alcaline est une solution alcaline aqueuse, et il est possible d'ajouter le précipité gélatineux à la solution alcaline, ou l'agent alcalin à la solution dans laquelle on aura au préalable disposé le précipité gélatineux ou gâteau.

Ainsi, selon une variante, l'étape (iii) du présent procédé est mise en oeuvre par traitement du précipité gélatineux ayant adsorbé les ions sulfates par une solution alcaline.

Selon une autre variante, l'étape (iii) du présent procédé est mis en oeuvre par addition d'un agent alcalin une solution dans laquelle le précipité gélatineux ayant adsorbé les ions sulfates a été préalablement dispersé.

La quatrième étape du procédé est la séparation d'un côté en une solution enrichie en ions sulfates, d'un autre côté en un précipité gélatineux zirconifère ou gâteau qui subit une opération de lavage. Cette séparation est mise en oeuvre par tout moyen approprié tel que centrifugation avec lavage ou filtration-lavage. La filtration-lavage consiste en une filtration suivie d'un lavage à l'eau. La température de mise en oeuvre est comprise entre 20 et 90°C, par exemple environ 50-80°C.

Selon un mode de réalisation, la température de mise en oeuvre du présent procédé est comprise entre 20 et 90°C, par exemple 50-80°C, avantageusement 50-60°C.

Le précipité gélatineux d'hydroxyde de zirconium hydraté utilisé dans la présente invention peut être utilisé une seule fois, puis éliminé, ou au contraire recyclé. Grâce à des propriétés améliorées, le précipité gélatineux selon la présente invention se prête particulièrement à un recyclage, en totalité ou en partie.

Ainsi, selon un mode de réalisation, on recycle en totalité ou en partie le précipité gélatineux zirconifère, avantageusement lavé et essoré, vers l'étape (i).

L'invention est maintenant décrite plus en détail dans les exemples suivants, donnés à titre illustratif et nullement limitatif. L'invention n'est pas limitée aux ions sulfates, elle s'applique de manière sensiblement identique à d'autres ions présentant des caractéristiques sensiblement similaires à celles des ions sulfates.

EXEMPLES

Description générale d'un essai

A 100 cm3 d'une saumure contenant soit, dans un premier temps, NaCl = 300 g/l et $SO_4^{--}$ = 20,5 g/l soit, dans un deuxième temps, NaCl = 200 g/l et $SO_4^{--}$ = 4,2 g/l (conditions du brevet européen EP-A-0 427256), on ajoute une certaine quantité d'hydroxyde de zirconium, la suspension est portée à 50°C et le pH est ajusté à 3. La durée d'agitation est de 30 minutes.

A l'issue de cette étape, on effectue une filtration et un lavage à l'eau. L'ensemble (filtrat plus eaux de lavage) est amené à un volume connu, puis on effectue le dosage des ions $SO_4^{--}$. Ceci permet d'effectuer un bilan massique des ions $SO_4^{--}$ fixés sur le solide.

Le gâteau zirconifère chargé en ions sulfates est alors remis en suspension dans une solution de soude à 10 g/l (100 cm3), le pH final est compris entre 11 et 12. La suspension est maintenue à 50°C durant 30 minutes. Après cette étape, la suspension est filtrée puis le gâteau est lavé. Les eaux de filtration et de lavage sont amenées à un volume connu afin d'effectuer des bilans sulfates. On note en général un bon accord entre les quantités fixées et celles désorbées en milieu basique.

Exemple 1

Essais avec séchage ou calcination préalable de l'hydroxyde de zirconium

- Synthèse de l'hydroxyde de zirconium

On prépare 3 330 cm3 de solution titrant 0,2M/l de Zr en ajoutant 215 g de $ZrOCl_2,8H_2O$. Sous agitation, le pH est amené à 9,8 par ajout de 264 cm3 de $NH_4OH$ titrant 2%. Après 15 minutes d'agitation, la suspension est filtrée et lavée à l'eau. Le gâteau obtenu est séché à 90°C jusqu'à poids constant. Le titre en $ZrO_2$ est déterminé par ATG en calcinant le produit à 1 000°C (pertes observées -12,1%).

Le gâteau séché à 90°C contient donc 87,9% de $ZrO_2$, et correspond à l'essai 1.1. Différentes fractions sont chauffées à 160°C-240°C-370°C-500°C. Les pertes de masse observées entre 90°C et la température d'essai sont indiquées ci-après (i.e. par rapport au gâteau séché) dans les essais 1-2 à 1-5.

| Essai | Température | Perte de masse % | Teneur en $ZrO_2$ |
|-------|-----------|------------------|--------------------|
| 1-1 | 90°C | -12,1% | 87,9% |
| 1-2 | 160°C | - 5,78% | 93,29% |
| 1-3 | 240°C | - 8,4% | 95,96% |
| 1-4 | 370°C | -11,58% | 99,41% |
| 1-5 | 500°C | -11,61% | 99,43% |

- Absorption des ions sulfates

Pour chaque essai, on a engagé environ 10 g de poudre. Le volume de saumure utilisée est de 100 cm3 (NaCl = 300 g/l et $SO_4$ = 20,79 g/l).

| Température de l'essai | 50°C |
|---|---|
| pH final | 3 |
| Durée de l'essai | 30 minutes |

Les résultats sont donnés au tableau ci-dessous:

| N° essai | T (séchage) | masse engagée (g) | | masse fixée $SO_4$ | $SO_4$ fixé/$ZrO_2$ engagé % massique |
|---|---|---|---|---|---|
| | | $ZrO_2$ | $SO_4$ | | |
| 1-1 | 90 | 8,7926 | 2,079 | 0,4715 | 5,36% |
| 1-2 | 160 | 9,3378 | 2,079 | 0,414 | 4,43% |
| 1-3 | 240 | 9,632 | 2,079 | 0,344 | 3,57% |
| 1-4 | 370 | 9,9416 | 2,079 | 0,129 | 1,30% |
| 1-5 | 500 | 9,9525 | 2,079 | 0,084 | 0,84% |

## Exemple 2

Dans l'essai 2, on sèche le gâteau zirconifère à 40°C (précipitation de l'hydroxyde de zirconium à pH 9,3).

Le taux de $ZrO_2$ est déterminé par calcination à 1000°C du produit séché à 40°C. Les conditions opératoires et les solutions utilisées sont les mêmes que pour les essais 1-1 à 1-5 précédents.

Les résultats sont donnés dans le tableau ci-dessous:

| N° essai | T (séchage) | masse engagée (g) | | masse fixée $SO_4$ | $SO_4$ fixé/$ZrO_2$ engagé % massique |
|---|---|---|---|---|---|
| | | $ZrO_2$ | $SO_4$ | | |
| 2 | 40 | 7,627 | 2,079 | 0,479 | 6,28% |

De même pour cet essai, on constate qu'à plus basse température de séchage, on note un accroissement du rapport massique $SO_4$/$ZrO_2$.

## Exemple 3

### - Comparaison avec des résultats publiés (EP 427256)

On considère les trois premiers essais de l'exemple 1 et on calcule les bilans matières pour 1 litre de saumure (NaCl = 200 g/l et $Na_2SO_4$ = 6,2 g/l soit $SO_4$ = 4,19 g/l). Les résultats sont consignés dans le tableau ci-dessous:

| N° essai | Zr/SO$_4$ (mole) initial | masse engagée g | | SO$_4$ fixé | masse fixée SO$_4$ | SO$_4$ fixé/ZrO$_2$ engagé % massique |
|---|---|---|---|---|---|---|
| | | ZrO$_2$ | SO$_4$ | | | |
| de l'ex. 1 du brevet | 5,5 | 29,590 | 4,19 | 44% | 1,844 | 6,23% |
| de l'ex. 2 du brevet | 11 | 59,180 | 4,19 | 88% | 3,689 | 6,23% |
| de l'ex. 3 du brevet | 16,5 | 88,770 | 4,19 | 100% | 4,192 | 4,72% |

On constate que le taux de sulfates fixé calculé d'après les données du brevet est sensiblement le même que celui obtenu avec une poudre séchée à 40°C (essai 2).

## Exemple 4

### Essais à partir d'hydroxyde de zirconium non séché

#### - Précipitation en batch de Zr(OH)$_4$ hydraté

On a engagé 250 cm3 d'une solution 0,2M/l de Zr à partir de ZrOCl$_2$,8H$_2$O. La précipitation du zirconium a été effectuée à température ambiante et au pH final de 9,45. Après filtration-lavage, on obtient un gâteau humide pesant 99,1 g et renfermant 8,625 g de ZrO$_2$. La formule de cet hydroxyde de zirconium hydraté est Zr(OH)$_4$.70H$_2$O.

#### - Absorption des ions sulfates

Avec ces 99,1 g de précipité gélatineux humide, on a effectué trois cycles d'absorption en milieu acide et de désorption en milieu basique (notés 4-1, 4-2 et 4-3 respectivement). On a utilisé à chaque fois 100 cm3 de saumure titrant NaCl = 300 g/l et titrant en SO$_4$ 20,79 g/l. A chaque stade, c'est un gâteau lavé et non séché qui a été utilisé pour faire l'étape suivante. Les bilans massiques donnés ci-après sont calculés à partir des volumes de filtrat acide + eau de lavage du gâteau.

| N° essai | masse engagée g | | masse fixée SO$_4$ | SO$_4$ fixé/ZrO$_2$ engagé % massique |
|---|---|---|---|---|
| | ZrO$_2$ | SO$_4$ | | |
| 4-1 | 8,625 | 2,079 | 1,849 | 21,44% |
| 4-2 | 8,625 | 2,079 | 1,559 | 18,08% |
| 4-3 | 8,625 | 2,079 | 1,519 | 17,61% |

On remarque que les taux de rétention des ions sulfates obtenus sont sensiblement supérieurs à ceux obtenus avec des produits préalablement séchés même à 40°C et à ceux présentant une perte au feu inférieure à 30%.

Exemple 5

Essais semi-continu de précipitation de Zr(OH)$_4$

**Préparation du précipité gélatineux à pH 8**

Les précipités gélatineux précédents obtenus à température ambiante sont difficilement filtrables du fait de la finesse des grains élémentaires. On fait grossir ces grains en effectuant la précipitation à 85-90°C. Dans un réacteur contenant 250 cm3 de solution de Zr (0,2M/l), on ajuste le pH à 8, puis en continu, on additionne la solution de Zr tout en régulant le pH à 8 (débit = 1 l/h). Le pH est régulé à l'aide d'une solution ammoniacale à 20% en poids de NH$_3$.

Le pH est mesuré dans une enceinte externe au réacteur, cette enceinte est alimentée en continu par une circulation de suspension issue du réacteur au moyen d'une pompe, la suspension tombe alors par gravité dans le réacteur. Une fois le réacteur plein, on arrête l'alimentation et on laisse mûrir 30 minutes. On arrête l'agitation afin de laisser décanter la suspension. Après la décantation, on soutire la liqueur surnageante. Une fois le réacteur partiellement vidangé, on alimente de nouveau le réacteur, remis en agitation, avec la même solution de Zr et en régulant le pH à 8 (T = 85°C).

Le fait d'opérer en semi-continu permet un grossissement des grains, c'est ainsi que le diamètre médian passe de 2,63 microns à 5,08 microns à la fin du deuxième cycle de précipitation.

Le précipité gélatineux obtenu présente la formule suivante: Zr(OH)$_4$.92H$_2$O.

A l'issue de ces deux cycles de précipitation, la totalité de la suspension est filtrée, puis le gâteau est lavé. Le gâteau essoré est gardé tel quel pour les essais d'absorption-désorption de sulfates (teneur moyenne en ZrO$_2$ = 6,8%).

**Absorption des ions sulfates**

Pour les trois essais dont les résultats sont donnés dans le tableau suivant, on a engagé une certaine masse d'hydroxyde de zirconium non séché dans 100 cm3 de saumure.

| Température | 50°C |
|---|---|
| pH final | 3 |
| Durée | 30 minutes |

De même que pour les essais précédents, on a filtré la suspension acide et lavé le gâteau. Les eaux de filtration et de lavage sont amenées à un volume connu, puis on dose la teneur en SO$_4^{--}$ afin d'effectuer les bilans matières. Pour connaître la quantité de ZrO$_2$ engagé par essai, la totalité du gâteau issu de l'étape de désorption est dissous dans un volume connu d'acide sulfurique 1M. Le zirconium est dosé par ICP.

Les résultats obtenus sont donnés au tableau ci-après:

| N° essai | masse engagée g | | masse fixée SO$_4$ | SO$_4$ fixé/ZrO$_2$ engagé % massique |
|---|---|---|---|---|
| | ZrO$_2$ | SO$_4$ | | |
| 5-1 | 7,9832 | 2,05 | 1,6425 | 20,57% |
| 5-2 | 0,6754 | 0,422 | 0,117 | 17,32% |
| 5-3 | 6,3488 | 0,422 | 0,4145 | 6,53% |

<u>Exemple 6</u>

**Préparation du précipité gélatineux à pH 4**

Le mode opératoire de ces essais semi-continu est sensiblement le même que celui précédent mis à part le pH de régulation fixé à 4 (même T = 85°C). On a effectué trois cycles de précipitation, chaque cycle étant entrecoupé par une étape de décantation de la suspension, puis d'un soutirage de la phase claire surnageante. La formule de l'hydroxyde de zirconium hydraté est: $Zr(OH)_4.20H_2O$.

Le grossissement des grains a été suivi au compteur coulter, à la fin de chaque cycle:

| Cycle n° | diamètre moyen micron | %<1,2 micron |
|---|---|---|
| 1 | 2,65 | 18% |
| 2 | 4,54 | 1,50% |
| 3 | 5,04 | 0,90% |

**Absorption des ions sulfates**

Les essais, noté 6 et 6 bis sur le tableau de résultats ci-après, correspondent à une simulation de recyclage du gâteau zirconifère résultant d'une désorption en milieu basique. On a donc effectué deux cycles complets d'absorption-désorption des ions sulfates.

| Température | 50°C |
|---|---|
| pH final d'absorption | 3 |
| Durée d'agitation | 30 minutes |

De même que pour les essais à partir du précipité gélatineux n° 1, la quantité de $ZrO_2$ engagée est déterminée après dissolution sulfurique de la totalité du gâteau. Les bilans matières sont donnés dans le tableau ci-dessous.

| N° essai | masse engagée g | | masse fixée SO$_4$ | SO$_4$ fixé/ZrO$_2$ engagé % massique |
|---|---|---|---|---|
| | $ZrO_2$ | $SO_4$ | | |
| 6 | 28,0409 | 2,05 | 2,02 | 7,20% |
| 6 bis | 28,0409 | 2,05 | 2,045 | 7,29% |

**Revendications**

1. Procédé de séparation d'ions sulfates de solutions de saumures, comprenant les étapes de:

(i) mise en contact de la solution de saumure avec un composé zirconifère, à un pH acide;
(ii) séparation en une solution de saumure appauvrie en ions sulfates et en le composé zirconifère sur lequel sont adsorbés les ions sulfates;
(iii) désorption des ions sulfates par traitement du composé zirconifère obtenu à l'étape (ii) à un pH basique;
(iv) séparation en une solution aqueuse basique enrichie en ions sulfates et en un composé zirconifère sensiblement exempt d'ions sulfates;
caractérisé en ce que le composé zirconifère est de l'hydroxyde de zirconium hydraté, de formule $Zr(OH)_4.xH_2O$, avec x compris entre 4 et 200, et se trouvant sous forme d'un précipité gélatineux non-séché.

2. Procédé selon la revendication 1, caractérisé en ce que le précipité gélatineux zirconifère présente la formule $Zr(OH)_4.xH_2O$, avec x compris entre 12 et 100, de préférence entre 12 et 25.

3. Procédé selon la revendication 1 ou 2, caractérisé en ce que la teneur en zirconium du précipité gélatineux est comprise entre 5 et 60% en poids, calculée sur la base du poids de $ZrO_2$.

4. Procédé selon l'une quelconque des revendications 1 à 3, caractérisé en ce que le rapport molaire $Zr/SO_4$ au cours de l'étape (i) est compris entre 2 et 20.

5. Procédé selon l'une quelconque des revendications 1 à 4, caractérisé en ce que le pH de l'étape (i) est compris entre 1 et 5, de préférence 2 à 4.

6. Procédé selon l'une quelconque des revendications 1 à 5, caractérisé en ce que le pH de l'étape (iii) est compris entre 7 et 13, de préférence 8 à 11.

7. Procédé selon l'une quelconque des revendications 1 à 6, caractérisé en ce que l'étape (ii) est une étape de filtration ou de filtration-lavage.

8. Procédé selon l'une quelconque des revendications 1 à 7, caractérisé en ce que l'étape (iv) est une étape de filtration-lavage.

9. Procédé selon l'une quelconque des revendications 1 à 8, caractérisé en ce que la température de mise en oeuvre est comprise entre 20 et 90°C.

10. Procédé selon l'une des revendications 1 à 9, caractérisé en ce qu'on recycle le précipité gélatineux de zirconium vers l'étape (i).

**Claims**

1. Process for the separation of sulphate ions from brine solutions, including the stages of:

    (i) bringing the brine solution into contact with a zirconium-bearing compound, at an acidic pH;
    (ii) separation into a brine solution depleted in sulphate ions and the zirconium-bearing compound on which the sulphate ions are adsorbed;
    (iii) desorption of the sulphate ions by treatment of the zirconium-bearing compound obtained in stage (ii) at a basic pH;
    (iv) separation into a basic aqueous solution enriched in sulphate ions and a zirconium-bearing compound substantially free from sulphate ions,
    characterized in that the zirconium-bearing compound is hydrated zirconium hydroxide of formula $Zr(OH)_4 \cdot xH_2O$, with x between 4 and 200, and present in the form of an undried gelatinous precipitate.

2. Process according to Claim 1, characterized in that the zirconium-bearing gelatinous precipitate has the formula $Zr(OH)_4 \cdot xH_2O$ with x between 12 and 100, preferably between 12 and 25.

3. Process according to Claim 1 or 2, characterized in that the zirconium content of the gelatinous precipitate is between 5 and 60 % by weight, calculated on the basis of the weight of $ZrO_2$.

4. Process according to any one of Claims 1 to 3, characterized in that the molar ratio $Zr/SO_4$ during stage (i) is between 2 and 20.

5. Process according to any one of Claims 1 to 4, characterized in that the pH of stage (i) is between 1 and 5, preferably 2 to 4.

6. Process according to any one of Claims 1 to 5, characterized in that the pH of stage (iii) is between 7 and 13, preferably 8 to 11.

7. Process according to any one of Claims 1 to 6, characterized in that stage (ii) is a filtration or filtration-washing stage.

8. Process according to any one of Claims 1 to 7, characterized in that stage (iv) is a filtration-washing stage.

9. Process according to any one of Claims 1 to 8, characterized in that the temperature of application is between 20 and 90°C.

10. Process according to one of Claims 1 to 9, characterized in that the gelatinous precipitate of zirconium is recycled towards stage (i).

**Patentansprüche**

1. Verfahren zur Abtrennung von Sulfationen aus Salzlösungen, das die folgenden Verfahrensschritte umfaßt:

   (i) Inkontaktbringen der Salzlösung mit einer zirkoniumhaltigen Verbindung bei saurem pH-Wert;
   (ii) Trennung in eine Salzlösung, welche an Sulfationen verarmt ist, und in eine zirkoniumhaltige Verbindung, an der die Sulfationen adsorbiert sind;
   (iii) Desorption der Sulfationen durch Behandlung der in Verfahrensschritt (ii) erhaltenen Zirkoniumverbindung bei basischem pH-Wert;
   (iv) Trennung in eine wäßrige basische Lösung, die an Sulfationen angereichert ist, und in eine zirkoniumhaltige Verbindung, die nahezu sulfationenfrei ist;
   dadurch gekennzeichnet, daß die zirkoniumhaltige Verbindung ein wasserhaltiges Zirkoniumhydroxid der Formel $Zr(OH)_4 \cdot xH_2O$ ist, wobei x zwischen 4 und 200 liegt und die Verbindung in Form eines nicht getrockneten gelatineartigen Niederschlags vorliegt.

2. Verfahren nach Anspruch 1, dadurch gekennzeichnet, daß der zirkoniumhaltige gelatineartige Niederschlag die Formel $Zr(OH)_4 \cdot xH_2O$ mit x zwischen 12 und 100, vorzugsweise zwischen 12 und 25, aufweist.

3. Verfahren nach Anspruch 1 oder 2, dadurch gekennzeichnet, daß der Zirkoniumgehalt des gelatineartigen Niederschlags zwischen 5 und 60 Gew.-% liegt, berechnet auf Basis des $ZrO_2$-Gewichts.

4. Verfahren nach einem der Ansprüche 1 bis 3, dadurch gekennzeichnet, daß das $Zr/SO_4$-Molverhältnis im Verlauf des Verfahrensschrittes (i) zwischen 2 und 20 liegt.

5. Verfahren nach einem der Ansprüche 1 bis 4, dadurch gekennzeichnet, daß der pH-Wert des Verfahrensschrittes (i) zwischen 1 und 5, vorzugsweise zwischen 2 und 4, liegt.

6. Verfahren nach einem der Ansprüche 1 bis 5, dadurch gekennzeichnet, daß der pH-Wert des Verfahrensschrittes (iii) zwischen 7 und 13, vorzugsweise zwischen 8 und 11, liegt.

7. Verfahren nach einem der Ansprüche 1 bis 6, dadurch gekennzeichnet, daß der Verfahrensschritt (ii) ein Filtrations- oder Filtrations/Wasch-Schritt ist.

8. Verfahren nach einem der Ansprüche 1 bis 7, dadurch gekennzeichnet, daß der Schritt (iv) ein Filtrations/Wasch-Schritt ist.

9. Verfahren nach einem der Ansprüche 1 bis 8, dadurch gekennzeichnet, daß die Temperatur zur Durchführung des Verfahrens zwischen 20 °C und 90 °C liegt.

10. Verfahren nach einem der Ansprüche 1 bis 9, dadurch gekennzeichnet, daß man den gelatineartigen Zirkoniumniederschlag in Schritt (i) erneut einsetzt.